**Europäisches Patentamt**

(19) **European Patent Office**

**Office européen des brevets**

(11) Numéro de publication: **0 179 718**
**B1**

(12) **FASCICULE DE BREVET EUROPÉEN**

(45) Date de publication du fascicule du brevet:
**21.09.88**

(51) Int. Cl.⁴: **B 30 B 9/22,** B 30 B 5/02

(21) Numéro de dépôt: **85402032.8**

(22) Date de dépôt: **21.10.85**

(54) **Presse à chambre gonflable annulaire.**

(30) Priorité: **23.10.84 FR 8416191**

(43) Date de publication de la demande:
**30.04.86 Bulletin 86/18**

(45) Mention de la délivrance du brevet:
**21.09.88 Bulletin 88/38**

(84) Etats contractants désignés:
**AT BE CH DE GB IT LI LU NL SE**

(56) Documents cité:
**BE-A-480 105**
**DE-C-666 463**
**FR-A-1 093 396**
**FR-A-1 158 313**
**FR-A-2 545 416**

(73) Titulaire: **SOCIETE D'ETUDES ET DE RECHERCHES DE L'ECOLE NATIONALE SUPERIEURE D'ARTS ET METIERS en abrégé S E R A M, 151, Boulevard de l'Hôpital, F-75013 Paris (FR)**

(72) Inventeur: **Duchamp, Robert, 34 bis, Boulevard de la Perruque, F-34000 Montpellier (FR)**
Inventeur: **Plever, Roland, 2, rue de Bel Air, F-02100 St Quentin (FR)**
Inventeur: **Truchot, Patrick, 17, Allée Paul Cézanne, F-77420 Champs- sur- Marne (FR)**

(74) Mandataire: **Chevallier, Robert Marie Georges, Cabinet BOETTCHER 23, rue La Boétie, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Presse à chambre gonflable annulaire.

L'invention a pour objet une presse à chambre gonflable annulaire contenue dans un corps tubulaire extérieur rigide et destinée à comprimer essentiellement en sens radial, sur l'ensemble de sa longueur, tout corps introduit dans l'espace central entouré par la chambre gonflable annulaire quand celle-ci est à l'état dégonflé.

On connaît déjà des presses de ce type dans lesquelles la chambre gonflable réalisée en matière extensible élastiquement, par exemple en élastomère, se présente comme un manchon cylindrique que l'on dégonfle pour le faire se rétracter avant d'y introduire un corps à comprimer et que l'on gonfle ensuite pour le faire se dilater en comprimant ce corps. La chambre gonflable est en contact avec le corps à comprimer par sa paroi annulaire intérieure.

Pendant l'opération de compression, il est courant que le diamètre extérieur du corps comprimé diminue. Autrement dit, plus la pression s'élève à l'intérieur de la chambre gonflable, plus le corps comprimé se réduit en diamètre et plus la paroi annulaire intérieure de la chambre gonflable devrait elle aussi diminuer en longueur circonférentielle ou périmétrique, afin de suivre la variation de dimension du corps comprimé contre lequel elle est plaquée par la pression.

En pratique, cette paroi annulaire intérieure s'adapte à la réduction de diamètre du corps comprimé en formant de nombreux plis qui prennent progressivement de l'importance à mesure que la compression se poursuit.

Ces plis sont une cause d'affaiblissement et de détérioration rapide de la matière qui constitue la chambre gonflable. On constate, en effet, qu'un effet important de compression s'exerce sur la matière, au fond des plis, jusqu'à en provoquer la cassure, par écrasement. Dans les flancs des plis, et surtout à proximité du corps comprimé, il se produit au contraire un allongement qui dépasse couramment 50 % et qui peut même être supérieur à la limite élastique des élastomères (400 à 500 %). De plus, à l'endroit des plis qui croissent constamment en importance pendant la compression, la contrainte de pression excercée sur le corps comprimé n'est pas égale à ce qu'elle est dans les zones où la paroi de la chambre est bien appliquée à plat contre le corps comprimé.

Par exemple le document FR-A -1 093 396 décrit une essoreuse à linge qui ne comporte aucune disposition évitant les inconvénients rappelés ci-dessus puisque, à l'intérieur d'une enveloppe rigide analogue à une lessiveuse cylindrique, est simplement introduite une chambre annulaire en caoutchouc.

L'invention a pour but principal de parvenir à une presse à chambre gonflable annulaire en élastomère ayant une paroi intérieure annulaire qui est appliquée par la pression contre un corps à comprimer et qui ne forme pas de plis en accompagnant la diminution de grosseur du corps comprimé sous l'effet de la pression.

On atteint ce but conformément à l'invention avec une presse utilisable dans un milieu qui l'environne pour la compression d'un corps à comprimer, comprenant un corps d'appui rigide extérieur tubulaire ayant une face intérieure, une chambre annulaire gonflable ayant une paroi extérieure et une paroi intérieure, cette chambre étant logée à l'intérieur du corps d'appui avec sa paroi extérieure placée contre la face intérieure de ce même corps d'appui, caractérisée en ce qu'elle comprend en outre des moyens de liaison fixes qui tiennent la paroi extérieure de la chambre gonflabe appliquée contre ladite face intérieure du corps d'appui à toute valeur de la pression et de la dépression à l'intérieur de cette chambre cependant que la paroi intérieure de cette chambre gonflable a en section droite un périmètre tel que, pendant l'utilisation quand cette chambre est gonflée à une valeur de la pression de gonflage qui correspond à l'état de compression maximum du corps, ce périmètre a une valeur comprise entre 1 fois et 0,85 fois le périmètre de la même section droite quand la pression dans la chambre gonflable est sensiblement égale à la pression du milieu environnant.

Si l'on suppose, pour faciliter les explications, que le corps à comprimer est un cylindre, au moins approximativement, ayant un diamètre avant compression exprimé par DO et un diamètre en fin de compression exprimé par DP, le diamètre intérieur DGO de la chambre gonflable mise librement en communication avec l'atmosphère devient en fin de compression égal à une valeur comprise entre DGO et 0,850 DGO. Il est préférable d'adopter la valeur égale à 0,90 DGO environ.

Il est nécessouire aussi que la paroi extérieure de chambre gonflable soit tenue appliquée en permanence contre le corps d'appui extérieur rigide par des moyens de liaison fixes. De cette façon, si l'on fait le vide dans la chambre, la paroi intérieure de celle-ci vient s'appliquer contre la paroi extérieure. La chambre gonflable a alors une épaisseur radiale que l'on peut estimer à 20 mm au maximum, en tenant compte de l'épaisseur de chacune des deux parois superposées et de celle des moyens de liaison dont l'épaisseur est très variable selon leur nature. Dans cet état où elle est vide d'air, la chambre a un diamètre intérieur DGV dont la valeur doit être supérieure au diamètre extérieur DO du corps à comprimer pour réserver un jeu radial permettant une introduction facile de ce corps à l'intérieur de la chambre vide d'air. Cependant, ce jeu doit rester aussi faible qu'il est possible, afin que la course morte de la paroi intérieure de la chambre avant son contact avec le corps à comprimer soit minimisée. En général, on admet la relation DGV = 1,015 à 1,035 DO entre le diamètre intérieur de la chambre vide d'air et le diamètre extérieur du corps à comprimer.

Le corps à comprimer n'est pas compressible jusqu'à un diamètre nul. De nombreuses observations ont montré que dans la plupart des cas le diamètre DP en fin de compression est égal à DGO qui est 80 % environ du diamètre DO avant compression.

Il résulte de ce qui précède que le diamètre de la paroi intérieure de la chambre gonflable varie de la valeur de son diamètre intérieur DGV quand elle est vide d'air (qui égale 1,035 DO au maximum) à la valeur DP, ou 0,85 DGO au minimum en fin de compression, soit au minimum 0,85 x 0,80 DO (puisque DGO = 0,80 DO) ou 0,68 DO.

Par ailleurs, puisque à la fin de la compression, la paroi intérieure a un diamètre identique à son diamètre en l'absence de pression et de dépression dans la chambre, on constate que cette paroi intérieure est mise en allongement entre la valeur DGO = 0,80 DO et la valeur 1,035 DO sous l'effet combiné des moyens de liaison qui agissent sur la paroi extérieure de la chambre et de la dépression créée dans celle-ci en vue de la mise en place du corps à comprimer. On vérifie facilement que cet allongement est de l'ordre de 20 %. Or, on admet couramment qu'un élastomère travaille dans des conditions satisfaisantes quand son allongement est de 50 % au maximum.

Par conséquent, une presse réalisée avec des moyens fixes de liaison tenant en permanence la paroi extérieure de la chambre appliquée contre le corps d'appui extérieur, satisfait à toutes les conditions nécessaires à la réalisation d'un pressage régulier et homogène du corps comprimé, sans formation de plis ni allongement excessif de la paroi intérieure de la chambre gonflable.

Il est préférable, en outre, que la paroi extérieure de la chambre soit en état d'allongement quand elle est tenue appliquée contre le corps d'appui extérieur.

On peut adopter comme moyens de liaison entre la paroi extérieure de la chambre gonflable et le corps d'appui extérieur fixe tous les moyens convenables qui conservent l'étanchéité de la chambre et qui n'imposent pas de contraintes excessives à la paroi extérieure. Par exemple, on peut réaliser une liaison de nature chimique par adhérence de l'élastomère à la surface du corps d'appui, métallique de préférence. On peut réaliser aussi une liaison de nature mécanique au moyen de pièces planes fixées à la paroi extérieure de la chambre, d'une part, et au corps d'appui d'autre part.

Selon un mode de réalisation de l'invention plusieurs plaques espacées, successives, allongées dans le sens circonférentiel de la chambre sont montées à l'intérieur de celle-ci ; chacune de ces plaques est fixée à au moins une tige radiale qui traverse de façon étanche la paroi extérieure de la chambre et qui traverse aussi librement, par un trou correspondant, le corps d'appui extérieur. Chaque tige radiale est munie en dehors du corps d'appui d'un moyen de traction et de blocage, tel qu'un écrou par exemple, qui sert à tirer la plaque correspondante vers le corps d'appui jusqu'à ce que cette plaque tienne fermement la paroi extérieure de la chambre appliquée contre la surface intérieure du corps d'appui.

De préférence, chaque plaque est cintrée à un rayon de courbure qui est égal ou supérieur à celui de la surface intérieure du corps d'appui, afin que la paroi extérieure de la chambre soit bien appliquée contre le corps d'appui.

On donnera maintenant, sans intention limitative et sans exclure aucune variante, une description d'un exemple préféré de réalisation. On se reportera au dessin annexé dans lequel:

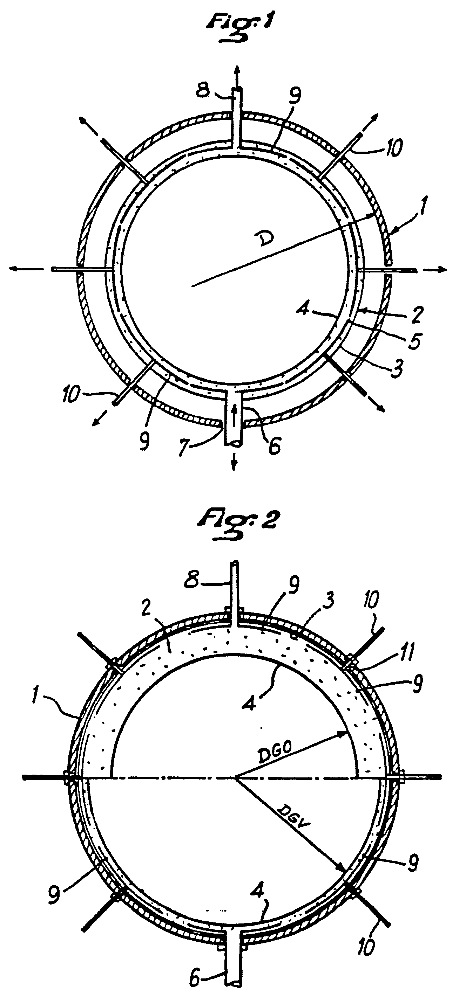

- la figure 1 est une vue schématique en coupe par un plan transversal, d'une presse conforme à l'invention, représentée avant la réalisation de la liaison entre la chambre gonflable et le corps d'appui extérieur,
- la figure 2 est une vue analogue à la figure 1 après la réalisation de la liaison entre la chambre gonflable et le corps d'appui extérieur, dans la moitié supérieure de la figure la chambre est à la pression atmosphérique environnante, dans la moitié inférieure de la figure le vide est réalisé dans la chambre,

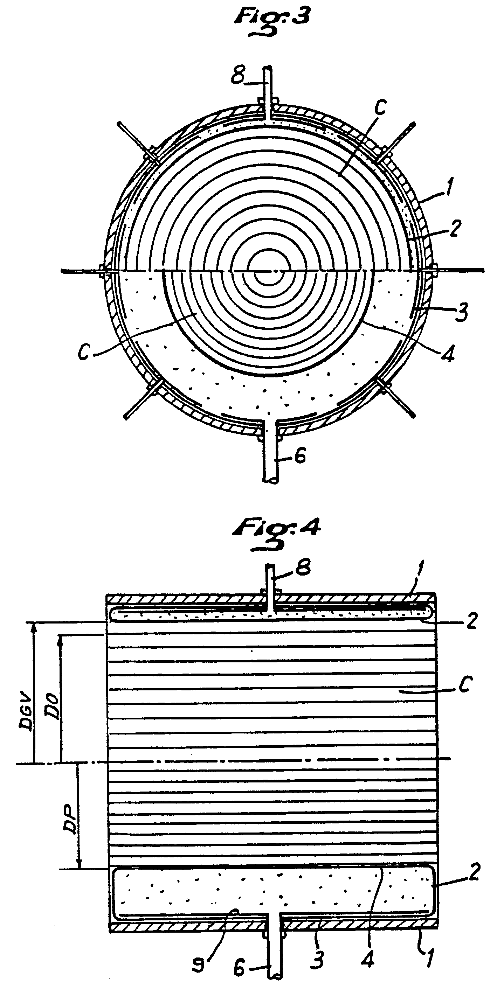

- les figures 3 et 4 sont des vues de la même presse respectivement en coupe par un plan transversal et en coupe par un plan longitudinal, avec un corps représenté à l'intérieur de la chambre gonflable, avant la compression dans la moitié supérieure des figures, à la fin de l'opération de compression dans la moitié inférieure des figures.

Une presse conforme à l'invention comprend un corps d'appui extérieur tubulaire 1, rigide, ayant, quand le corps à comprimer est cylindrique, la configuration d'un cylindre avec un diamètre intérieur D. A l'intérieur de ce corps d'appui 1 est placée une chambre gonflable 2 en matière élastique du genre élastomère (caoutchouc naturel ou synthétique, polyuréthane, silicone, ...). A l'état libre, la chambre 2 a l'apparence générale d'un fourreau annulaire cylindrique avec une paroi cylindrique extérieure 3 et une paroi cylindrique intérieure 4 comme on peut le voir sur la figure 1 ; son diamètre extérieur est inférieur au diamètre intérieur D du corps d'appui extérieur 1. Le corps d'appui extérieur 1 et la chambre 2 ont une longueur qui est sensiblement égale à celle d'un corps C à comprimer comme le montre la figure 4. Le volume intérieur 5 de la chambre 2 est mis en communication avec l'extérieur, pour en permettre le gonflage et le dégonflage, par une tubulure inférieure 6 qui traverse le corps d'appui 1 par une ouverture 7 correspondante. Cette tubulure 6 serait suffisante si la chambre 2 était utilisée avec un gaz sous pression. Il est préférable pour des raisons de sécurité, de gonfler la chambre 2 à l'aide d'un liquide sous pression. Dans ce cas une tubulure de purge d'air 8 est prévue à sa partie supérieure ; cette tubulure de purge 8 traverse aussi le corps d'appui 1.

Dans le volume intérieur 5 de la chambre 2 sont disposées des plaques 9 qui se succèdent en sens circonférentiel et qui s'étendent chacune sur toute la longueur de cette chambre 2. Le nombre de ces plaques 9 dépend du diamètre de la chambre ; en pratique, une largeur de 100 mm en sens circonférentiel convient bien. Chaque plaque 9 est pourvue en son centre d'une tige de traction 10 qui traverse de manière étanche la paroi extérieure 3 de la chambre 2 et qui traverse aussi, mais de manière libre, par un trou 11 correspondant de grosseur convenable, le corps d'appui extérieur 1. Chaque tige de traction 10 est filetée ; en y vissant un écrou qui vient s'appuyer contre la face extérieure du corps d'appui 1 on exerce sur la tige 10 une traction de valeur contrôlable.

La tubulure inférieure 6 et la tubulure supérieure de purge 8 peuvent être fixées chacune à une plaque 9 à l'intérieur de la chambre 2 et jouer le rôle d'une tige 10; elles sont montées à la manière du corps de valve qui traverse une jante métallique et qui est réuni à une chambre à air sur une roue de bicyclette.

Dans le cas où les plaques 9 seraient très longues ou seraient insuffisamment rigides sur la totalité de leur longueur, on pourrait prévoir dans le sens de la longueur et aussi en sens circonférentiel, plusieurs tiges de traction 10 sur chaque plaque.

A l'état libre (figure 1) la chambre 2 est espacée en sens radial du corps d'appui extérieur 1. Les plaques 9 sont alors jointives, de préférence, en sens circonférentiel. Quand on exerce une traction sur les tiges 10 vers l'extérieur de la chambre 2 et du corps d'appui 1, les plaques 9 tirent la paroi extérieure 3 de la chambre 2 et la tiennent serrée contre la face intérieure du corps d'appui 1 (figure 2). La paroi extérieure 3 subit un allongement circonférentiel, les plaques 9 s'écartent les unes des autres puisqu'elles vont se placer sur une circonférence plus grande. Ces plaques 9 doivent être suffisamment rigides pour appliquer également par toute leur surface la paroi extérieure 3 contre le corps d'appui 1. Elles sont réalisables en métal (acier ordinaire, acier inoxydable, aluminium..) ou en matière plastique.

La paroi intérieure 4 ne subit qu'un allongement circonférentiel minime ou nul et elle présente alors un diamètre intérieur DGO quand la chambre 2 est en communication libre avec l'extérieur.

Cet état est celui de la presse de l'invention prête à être utilisée, la paroi extérieure 3 de la chambre 2 restant constamment liée à la face intérieure du corps d'appui extérieur rigide 1. Ainsi qu'on l'a dit plus haut, les plaques 9 et les tiges de traction 10 ne sont qu'un moyen mécanique de liaison susceptible d'être remplacé par des moyens équivalents.

Les dimensions, et notamment le diamètre de la chambre 2 et du corps d'appui 1, se déterminent en fonction du diamètre du corps à comprimer. Si l'on suppose que celui-ci a un diamètre DO avant compression (voir la moitié supérieure des figures 3 et 4) et un diamètre DP en fin de compression (voir la moitié inférieure des mêmes figures), il faut, que, quand elle est vidée de son air, la chambre 2 présente un diamètre intérieur DGV (voir la moitié inférieure de la figures 2) qui permette d'y introduire facilement le corps C à comprimer. En pratique, on admet que DGV = 1,015 à 1,035 DO, par exemple 1,020 DO.

Quand le corps C à comprimer a été placé à l'intérieur de la chambre 2 vidée de son air (moitié supérieure des figures 3 et 4), on gonfle cette dernière à l'aide d'un liquide sous pression jusqu'à la valeur maximum de la pression (50 bars dans le présent exemple). Le corps C diminue de diamètre jusqu'à une valeur DP qui est aussi le diamètre de la paroi intérieure 4 de la chambre 2 (moitié inférieure des figures 3 et 4).

Dans cet état de compression totale du corps C, la paroi intérieure 4 doit avoir retrouvé sensiblement son diamètre DGO à l'état libre de la figure 2. On peut admettre que cette paroi intérieure prenne, en fin de compression du corps C, un diamètre inférieur à DGO; par exemple, on peut avoir DP = 0,85 DGO environ. En effet, dans une certaine mesure qui correspond sensiblement à cette relation, un excès de longueur de la paroi intérieure 4 en sens circonférentiel est "absorbé" par l'allongement que la pression fait subir à la chambre 2 en sens longitudinal. Une diminution plus importante du diamètre DP en fin de compression par rapport au diamètre DGO à l'état libre de la paroi intérieure 4 risque de provoquer la formation des plis que l'on désire éviter.

Le diamètre intérieur D du corps d'appui extérieur 1 découle de ce qui précède, compte tenu de ce que l'allongement de la paroi extérieure 3, sous l'effet des moyens de liaison 9, 10 ne doit pas dépasser ce que la matière élastique qui constitue la chambre 2 peut supporter.

Une presse conforme à l'invention ne sert pas seulement à la compression de corps cylindriques ; tout corps peut être comprimé dans la mesure où il est possible de réaliser une chambre gonflable 2 ayant une paroi intérieure 4 qui prend à l'état libre une configuration semblable à celle de la face extérieure du corps à comprimer. Dans ce cas, plus général, ce n'est plus le diamètre qui sert commodément de dimension de référence, mais le périmètre P de la section droite ; on doit alors donner à la paroi intérieure de la chambre gonflable un périmètre en section droite P à l'état libre qui prenne en fin de gonflage une valeur comprise entre P et 0,85 P.

Comme utilisation de la presse de l'invention, on peut citer la compression de matière agricole divisée en couches minces séparées par des toiles, comme décrit dans le document FR-A-8 307 451, pour déshydrater cette matière (luzerne, pulpe de betterave, drêches de brasserie..)

jusqu'à un taux de matière sèche supérieur à 50 % avec une consommation minimum d'énergie.

## Revendications

1. Presse utilisable dans un milieu qui l'environne pour la compression d'un corps (c) à comprimer, comprenant un corps d'appui rigide extérieur tubulaire (1) ayant une face intérieure, une chambre annulaire gonflable (2) ayant une paroi extérieure (3) et une paroi intérieure (4), cette chambre (2) étant logée à l'intérieur du corps d'appui (1) avec sa paroi extérieure (3) placée contre la face intérieure de ce même corps d'appui (1), caractérisée en ce qu'elle comprend des moyens de liaison fixes (9, 10) qui tiennent la paroi extérieure (3) de la chambre gonflable (2) appliquée contre ladite face intérieure du corps d'appui (1) à toute valeur de la pression et de la dépression à l'intérieur de cette chambre (2) cependant que la paroi intérieure (4) de cette chambre gonflable (2) a en section droite un périmètre tel que, pendant l'utilisation quand cette chambre (2) est gonflée à une valeur de la pression de gonflage qui correspond à l'état de compression maximum du corps (C), ce périmètre a une valeur comprise entre 1 fois et 0,85 fois le périmètre de la même section droite quand la pression dans la chambre gonflable (2) est sensiblement égale à la pression du milieu environnant.

2. Presse selon la revendication 1 caractérisée en ce que la paroi extérieure (3) est tenue appliquée contre le corps d'appui extérieur (1) en état d'allongement permanent périmétrique.

3. Presse selon la revendication 2 caractérisée en ce que les moyens de liaison comprennent des plaques (9) disposées à l'intérieur de la chambre (2) s'étendant sur la longueur de celle-ci et se succédant en sens périmétrique, chaque plaque (9) étant pourvue d'au moins une tige de traction (10) qui traverse de façon étanche la paroi extérieure (3), qui traverse librement le corps d'appui (1) et qui est munie en dehors de ce dernier de moyens de traction et de blocage au moyen desquels la paroi extérieure (3) est tenue appliquée par les plaques (9) contre le corps d'appui extérieur (1).

4. Presse selon la revendication 3 dans laquelle la chambre gonflable (2) est pourvue d'une tubulure de gonflage et de dégonflage (6) et éventuellement d'une tubulure de purge d'air (8), caractérisée en ce que chacune de ces tubulures (6, 8) est munie intérieurement à la chambre (2) d'une plaque (9) et joue le rôle d'une tige de traction (10).

## Claims

1. A press which can be used in a medium surrounding same for compression of a body (c) to be compressed, comprising a rigid external tubular support body (1) having an internal face, an inflatable annular chamber (2) having an external wall (3) and an internal wall (4), said chamber (2) being disposed within the support body (1) with its external wall (3) placed against the internal face of said support body (1), characterised in that it comprises fixed connecting means (9, 10) which hold the external wall (3) of the inflatable chamber (2) applied against said internal face of the support body (1) at any value of the pressure and the depression within said chaber (2) while the internal wall (4) of said inflatable chamber (2), in cross-section, is of a perimeter such that during use when said chamber (2) is inflated to a value of the inflation pressure which corresponds to the state of maximum compression of the body (C), said perimeter is of a value of between 1 and 0.85 times the perimeter of the same cross-section when the pressure in the inflatable chamber (2) is substantially equal to the pressure of the surrounding medium.

2. A press according to claim 1 characterised in that the external wall (3) is held applied against the external support body (1) in a condition of permanent perimetral elongation.

3. A press according to claim 2 characterised in that the connecting means comprise plates (9) disposed within the chamber (2) and extending over the length thereof and being arranged in succession in the perimetral direction, each plate (9) being provided with at least one traction rod (10) which passes sealingly through the external wall (3), which passes freely through the support body (1) and which is provided outside the latter with traction and blocking means, by means of which the external wall (3) is held applied by the plates (9) against the external support body (1).

4. A press according to claim 3 wherein the inflatable chamber (2) is provided with an inflating and deflating tube (6) and optionally an air purge tube (8) characterised in that each of said tubes (6, 8) is provided internally of the chamber (2) with a plate (9) and performs the function of a traction rod (10).

## Patentansprüche

1. Presse zur Anwendung in einem sie umgebenden Medium zur Kompression eines zu komprimierenden Körpers (C), umfassend ein festes röhrenförmiges äußeres Stützgehäuse (1) mit einer Innenfläche, einer ringförmigen aufblähbaren Kammer (2) mit einer Außenwandung (3) und einer Innenwandung (4), wobei diese Kammer (2) im Inneren des Stützgehäuses (1) angeordnet ist und mit ihrer Außenwandung (3) gegen die Innenfläche desselben Stützgehäuses (1) anliegt, dadurch gekennzeichnet, daß sie feststehende Verbindungsmittel (9, 10) umfaßt, welche die Außenwandung (3) der aufblähbaren Kammer (2) an der genannten Innenfläche des Stützgehäuses (1) bei jedem Wert des Druckes und Unterdruckes im Inneren dieser Kammer (2) festhalten, wogegen die Innenwandung (4) dieser aufblähbaren Kammer (2) im Querschnitt einen solchen Umfang hat, daß beim Gebrauch, wenn diese Kammer (2) mit einem Druckwert aufgebläht wird, der dem Zustand maximaler Kompression des Körpers (C) entspricht, dieser Umfang einen Wert zwischen dem 1-fachen und 0,85-fachen des Umfangs desselben Querschnitts hat, bei dem der Druck in der aufblähbaren Kammer (2) im wesentlichen gleich dem Druck des umgebenden Mediums ist.

2. Presse nach Anspruch 1, dadurch gekennzeichnet, daß die Außenwandung (3) in einem Zustand permanenter Umfangsdehnung in Anlage an dem äußeren Stützgehäuse (1) gehalten wird.

3. Presse nach Anspruch 2, dadurch gekennzeichnet, daß die Verbindungsmittel innerhalb der Kammer (2) angeordnete Platten (9) umfassen, die sich über die Länge der Kammer (2) erstrecken und in Umfangsrichtung aufeinanderfolgen, und daß jede Platte (9) mit mindestens einer Zugstange (10) versehen ist, die die Außenwandung (3) dicht abschließen und das Stützgehäuse (1) frei durchdringt und die außerhalb des letzteren mit Zug und Verriegelungsmitteln versehen ist, mit deren Hilfe die Außenwandung (3) durch die Platten (9) an dem äußeren Stützgehäuse (1) anliegend gehalten werden.

4. Presse nach Anspruch 3, wobei die aufblähbare Kammer (2) mit einem Einlaß- und Auslaßstutzen (6) und gegebenenfalls mit einem Entlüftungsstutzen (8) versehen ist, dadurch gekennzeichnet, daß jede dieser Stutzen (6, 8) innerhalb der Kammer (2) mit einer Platte (9) verbunden ist, und die Rolle einer Zugstange (10) übernimmt.

0 179 718

*Fig.1*

*Fig.2*

1

0 179 718

*Fig. 3*

*Fig. 4*